# EUROPEAN PATENT APPLICATION

(11) **EP 2 620 658 A2**
(43) Date of publication of application: **31.07.2013**
(21) Application number: 13151241.0
(22) Date of filing: 15.01.2013
(51) Int. Cl.: F16B 1/00, F16B 39/10

(54) **Threaded fastener assembly and method of locking a threaded fastener**

(30) Priority: 27.01.2012 GB 201201343
(71) Applicant: Rolls-Royce plc, London SW1E 6AT (GB)
(72) Inventor: Marshall, Luke, Bristol, BS9 2JS (GB)
(74) Representative: Roberts, Nicholas John

(57) **Abstract**

A threaded fastener assembly comprising a threaded fastener (12) and a length of locking wire (16) comprising a shape memory alloy material. The locking wire (16) is pre-worked such that the wire contracts when the locking wire (16) is heated from a temperature below an austenite start temperature (Aₛ) of the locking wire (16) to a temperature above the austenite start (Aₛ) temperature of the locking wire (16).

## Description

### Background of the Invention

The present invention relates to a threaded fastener assembly and a method of locking a threaded fastener in a tightened position.

Threaded fasteners such as bolts and nuts can be used to fasten two or more articles together. However, once tightened, threaded fasteners may subsequently rotate about their principal axis due to vibration for example, and thereby loosen over time.

Threaded fasteners may therefore be locked in the tightened position using a locking wire. In this method, a threaded fastener such as a bolt is located in an aperture of an article to be fastened, and is tightened by rotation about a principal axis until the head of the bolt contacts the surface of the article, and the required torque is then applied. A first end of a locking wire is fixed to the bolt, usually either to a side face of the head or underneath the head. Once the bolt is tightened, the locking wire is wrapped partly round the head, for example in a clockwise direction as viewed from above where the bolt has a right-handed thread. The locking wire is then pulled tight, and a second end is fixed to an anchor point on the article or another fastener.

However, it is difficult to tighten the locking wire to a sufficient extent to ensure that the bolt is locked in place, since the wire will be at least slightly elastic, and a small rotation of the bolt may be sufficient for it to become loose to an unacceptable degree. Traditional locking wire materials also stretch, or creep over a period of time, particularly where the article to which the bolt is attached is cyclically heated during use (i.e. repeatedly heated and then cooled). The wire may also become slack at elevated temperatures (i.e. temperatures above the temperature at which the locking wire is installed), due to thermal expansion of the wire material. This is particularly problematic where the wire is used to secure a threaded fastener in an article which experiences high temperatures in use, such as a gas turbine engine.

The present invention provides an improved threaded fastener assembly, and an improved method of locking a threaded fastener that addresses some or all of the aforementioned problems.

### Summary of the Invention

According to a first aspect of the invention, there is provided a threaded fastener assembly comprising:
a threaded fastener; and
a length of locking wire, the locking wire comprising a shape memory alloy material, wherein the locking wire is configured such that the wire contracts when the locking wire is heated from a temperature below an austenite start temperature (As) of the locking wire to a temperature above the austenite start (As) temperature of the locking wire.

By providing a locking wire which contracts when heated from below As to above As, the locking wire can be tensioned to a required extent more easily than prior locking wires by heating the wire.

The locking wire may comprise a metal alloy such as Nickel Titanium alloy (NiTi). In one example, the locking wire may comprise approximately 50% by atomic weight Nickel, and approximately 50% by atomic weight Titanium. In further examples, the locking wire may comprise copper-zinc-aluminium-nickel alloy, or copper-aluminium-nickel alloy. Alternatively, the locking wire may comprise a polymer material.

On heating, As may be in the range 0°C to 100°C. On heating, the austenite finish temperature A_{f} may be in the 0°C to 100°C, but will generally be above Aₛ. The locking wire may undergo an austenite to martensite transition when cooled from a temperature above a martensite start temperature Mₛ to a temperature below a martensite start temperature Mₛ, and may finish transitioning from an austenite phase to a martensite phase on cooling from a temperature below a martensite finish temperature M_{f}.

The locking wire may comprise a two way shape memory alloy material, such as an alloy comprising 40% by atomic weight Nickel, 51% by atomic weight Titanium and 9% by atomic weight Copper, or an alloy comprising Nickel, Titanium and Hafnium, or an alloy comprising Copper, Aluminium and Zinc. Where the locking wire comprises a two way shape memory alloy, the locking wire may be configured such that the wire expands when the locking wire is cooled from a temperature above the martensite start temperature Mₛ to a temperature below the martensite finish temperature M_{f}.

By using a two-way shape memory alloy, the tension in the locking wire can be adjusted by altering the temperature of the wire, i.e. the tension can be increased by raising the temperature, and reduced by lowering the temperature.

The locking wire may comprise a material having a martensite start temperature mₛ in the range -100°C to 100°C, and may comprise a material having a martensite finish temperature m_{f} in the range -100°C to 200°C. M_{f} will generally be a temperature below Mₛ. For materials which undergo an austenite to martensite transition when cooled from a temperature above Mₛ to a temperature below M_{f}, Mₛ will generally be at a higher temperature than Aₛ. In one example where the shape memory alloy material comprises 40% by atomic weight Nickel, 51% by atomic weight Titanium and 9% by atomic weight Copper, M_{f} may be approximately 48 °C, Mₛ may be approximately 70 °C, Aₛ may be approximately 57 °C and A_{f} may be approximately 104 °C

Alternatively, the locking wire may comprise a one-way shape memory alloy material such as Nickel Titanium alloy.

By using a one-way shape memory alloy, the tension in the locking wire can be increased by heating the wire, and the tension will remain once the wire is cooled.

According to a second aspect of the present invention, there is provided a method of locking a threaded fastener in a tightened position using a locking wire comprising a shape memory alloy, the method comprising:
rotating the threaded fastener to a tightened position on an article;
at a temperature below the austenite start temperature Aₛ of the wire, fixing a first end of a locking wire to the threaded fastener such that the locking wire projects from the fastener, and fixing a second end of the locking wire to an anchor; and
heating the locking wire to at least a temperature above than the austenite start temperature Aₛ of the locking wire such that the locking wire contracts.

During the heating step, the locking wire may be heated to a temperature above an austenite finish temperature A_{f} of the locking wire.

Prior to the heating step, the locking wire may be cooled to a temperature below M_{f}.

The locking wire may be heated by conducting an electrical current through the wire to cause resistive heating. Alternatively or in addition, the wire may be heated by an external heat source, by for example a heat gun, or alternatively by normal use of the article to which the fastener is attached.

The method may comprise the further step of cooling the locking wire to a temperature below Mₛ of the locking wire subsequent to the heating step. Where the locking wire is a one-way material, the locking wire will remain contracted following cooling. Where the locking wire is a two-way shape memory alloy, the locking wire may expand following cooling.

Prior to heating the wire from a temperature below Aₛ, the wire may be stretched to a predetermined extent at a temperature below Aₛ.

According to a third aspect of the invention, there is provided an article joined by a threaded fastening member in accordance with the first aspect of the invention.

According to a fourth aspect of the invention, there is provided a gas turbine engine comprising a threaded fastener assembly in accordance with the first aspect of the invention.

### Brief description of the drawings

The present invention will be more fully described by way of example with reference to the accompanying drawings, in which:
Figure 1 is a diagrammatic view of a fastener assembly in accordance with the present invention;
Figures 2a to 2d are diagrammatic views of a first locking wire for use in the assembly of Figure 1 under different conditions;
Figures 3a to 3d are diagrammatic views of a second locking wire for use in the assembly of Figure 1 under different conditions; and
Figure 4 is a cross sectional view of a gas turbine engine incorporating an article joined by the assembly of Figure 1.

### Detailed Description of the Preferred Embodiments

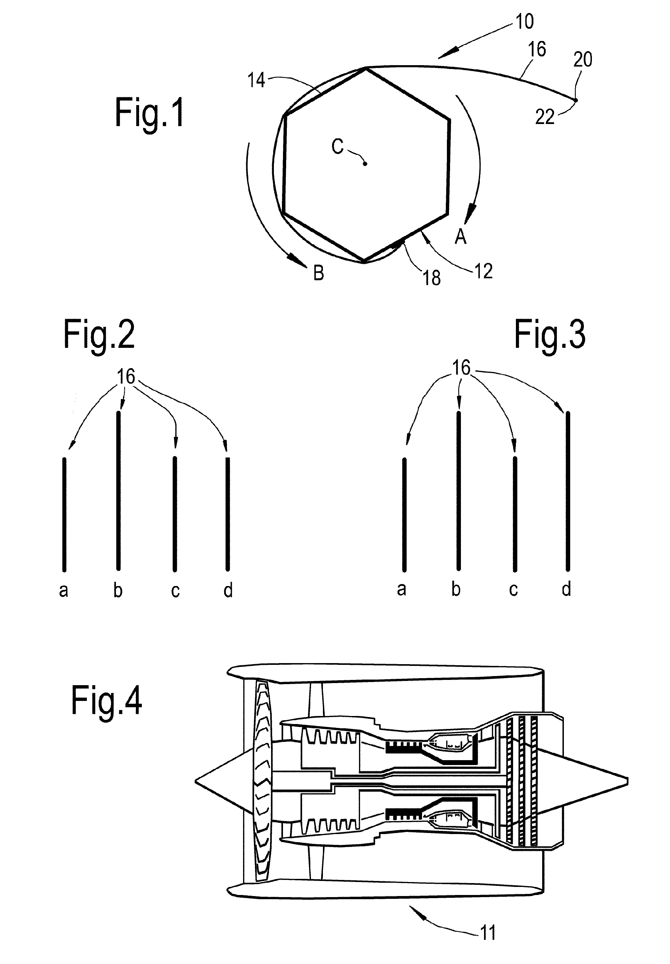

Figure 1 shows a fastener assembly 10 in accordance with the present invention in a tightened and locked position on an article 11. The fastener assembly 10 includes a fastener in the form of a bolt 12 having a head 14. The bolt 12 could be formed of any suitable material such as steel or Titanium. The fastener assembly 10 further includes a locking wire 16.

The locking wire 16 is made of a shape memory alloy (SMA) material. The SMA material could either be a one-way SMA material (such as that shown in Figures 2a to 2b ), or a two way SMA material (such as that shown in Figures 3a to 3b). In either case, the wire 16 may comprise a single strand of SMA material, or may comprise a plurality of strands that have been woven to form a thread.

SMA materials are characterised by undergoing a transition from a martensite phase to an austenite phase on heating to a transition temperature or range of temperatures. The term "martensite" will be understood to refer to a material having a crystalline structure formed by displacive transformation. For example, in NiTi, the martensitic crystal structure is monoclinic - i.e. a cube that has been "stretched" (displacively transformed) so that none of the sides are equal and sheared so that one of the angles is no longer 90°. The term "austenite" will be understood to refer to a material having a cubic crystalline structure. Generally, the transition from the martensite phase to the austenite phase on heating starts at an austenite start temperature Aₛ and finishes at an austenite finish temperature A_{f}. Similarly, SMA materials undergo a transition from an austenite phase to a martensite phase on cooling from a martensite start temperature Mₛ to a martensite finish temperature M_{f}.

SMA materials can be deformed, i.e. stretched, bent or compressed from its original dimensions when its temperature is below Aₛ. This process is generally known within the art as "pre-working". When the material is then heated to a temperature above Aₛ, the material will begin to return to its original dimensions, and the material will substantially fully return to its original dimensions on heating above A_{f}. SMA material is therefore said to "remember" its original shape prior to pre-working at a temperature below Aₛ.

SMA materials behave differently on cooling, depending on whether the material is a one-way or a two-way SMA material. In the case of a one-way material, the material remains in the original dimensions when cooled to a temperature below Mₛ, or if worked such that it becomes deformed when at a temperature above Aₛ, it remains in the worked dimensions.

However, on cooling, two-way SMA materials can be configured to remember their original dimensions at temperatures above Aₛ, as well as below Aₛ. Two-way SMA materials can therefore change to "high temperature" memorised dimensions on heating from a temperature below Aₛ to a temperature above A_{f}, and can then change to "low temperature" memorised dimensions on cooling from a temperature above Mₛ to a temperature below M_{f}.

The assembly 10 can be used to fasten an article such as the article 11 using the following method. Where the wire 16 comprises either a one-way SMA material, as shown in Figure 2, or a two-way SMA material, as shown in Figure 3, the wire 16 is first pre-worked, i.e. stretched, at a temperature below Aₛ of the material of the wire to a predetermined extent, from an original length (as shown in Figure 2a and Figure 3a) to a longer length (as shown in Figure 2b and Figure 3b). The predetermined extent corresponds to a required difference between the length of the wire before and after undergoing the austenite to martensite transition, such that sufficient slack is provided for the wire to be installed by the user, and sufficient tension is provided when the wire is heated from a temperature below Aₛ to at least a temperature above Aₛ in order for the fastener to be held in place. Generally, the wire will be heated until it reaches a temperature above A_{f}, at which point the wire will have substantially returned to its preworked length.

In general, shape memory alloys will completely recover their original length when heated to a temperature above A_{f} if they undergo a relatively small elongation at a temperature below Aₛ. However, if they undergo an elongation above a certain extent, the material will not completely recover its original length on heating. Below this limit however, a larger elongation at a temperature below Aₛ will result in the wire exerting a proportionately larger tension on the fastener on heating. The tension in the wire on heating can therefore be adjusted by lengthening the wire to a predetermined extent at a temperature below Aₛ. As the Young's modulus of the wire will be lower in the martensitic state (i.e. at temperatures below Aₛ), a lower load will be required to stretch the wire to a given extent in comparison to when the wire is in the austenitic state (i.e. at temperatures above A_{f}). As a result, a user can more easily apply a relatively large tensile load to the fastener by lengthening the wire to a required extent prior to heating.

In use, the bolt 12 is located in an aperture extending through two or more articles 11 to be fastened together, and is tightened by rotation about axis C until the head 14 contacts the surface of the uppermost article 11. The bolt 12 may be tightened by engagement with a corresponding threaded nut (not shown), or the aperture into which the bolt 12 is inserted may be threaded, as is well known in the art. A first end 18 of the locking wire 16 is fixed to a side face of the head 14, either before or after the bolt 3 is tightened. Alternatively, the first end 18 of the locking wire could be inserted between the head 14 and the surface of the article 11, and trapped in position as the bolt is tightened, with the remainder of the wire 16 projecting from a side of the head 14.

Once the bolt 12 is tightened, at a temperature below Aₛ of the material of the locking wire, the locking wire 16 is wrapped partly around the head 14 in a clockwise direction A as viewed from above where the bolt 12 has a right-handed thread as shown in Figure 1, or in an anti-clockwise direction B where the bolt has a left-handed thread. In most SMA materials, and most operating environments, Aₛ of the SMA material will be above the ambient temperature, such as 100°C for example. However, where Aₛ of the SMA material is below the ambient temperature, for example, around 0°C, the locking wire may first be cooled to below Aₛ. The locking wire 16 is then pulled tight, and a second end 20 of the wire 16 is fixed to an anchor point 22. The wire 16 does not however need to be pulled sufficiently tight to prevent rotation of the bolt 12 in the anti-clockwise (i.e. loosening) direction B, but merely enough to take up any slack in the wire 16.

Once the bolt 12 and locking wire 16 are in place, the wire 16 is heated to a temperature above Aₛ, and perhaps to a temperature above A_{f}. On heating to above A_{f}, the wire 16 returns to its original cold dimensions, and thus contracts as shown in Figures 2c and 3c. The contraction occurs gradually as the wire is heated from As to A_{f}. As a result, the tension on the wire 16 between the first end 18 of the wire 16 attached to the bolt 12 and the second end 20 attached to the anchor point 22 increases, and once the temperature of the wire reaches a particular temperature, which may be A_{f} for example, the bolt 12 is locked in the tightened position. The wire 16 may be heated by, for instance conducting an electrical current through the wire to cause the temperature to rise by resistive heating. Alternatively, the wire 16 may be heated externally, by for example a heat gun or by normal operational use of the article to which the assembly is attached, such as the gas turbine engine 11 shown in Figure 4.

Where the wire 16 is made of a one-way SMA material, the wire 16 will remain in its contracted, original length on cooling below Mₛ, as shown in Figure 2d. If the wire 16 is again heated to above Aₛ, the wire 16 will still remain at its original, shortened length. The wire 16 will therefore remain taut and the bolt 12 locked to the tightened position irrespective of the temperatures to which the wire 16 is subsequently subjected after initial heating.

Where the wire 16 is made of a two-way SMA material, the wire 16 will being to expand and thereby increase in length where the wire 16 is cooled following the heating step to a temperature below Mₛ, and will return to its pre-worked (i.e. stretched) length as shown in figure 3d when cooled following the heating step to a temperature below M_{f}. The wire 16 can then be made to contract again by heating to a temperature above Aₛ, thereby returning to its original length 3a. As a result, the length and therefore the tension of the wire 16 can be adjusted as desired, by raising the temperature above Aₛ, or lowering the temperature below Mₛ. The bolts 12 can therefore be automatically locked using higher tension during high temperature operation to the article 11 to which the bolt 12 is attached. On cooling however, the locking tension is lower, such that the bolt 12 can be undone more easily. Alternatively, where the temperature of the bolt 12 is controlled directly by for instance a heat gun, or resistive heating, the tension can be adjusted to an appropriate level in accordance with certain conditions. Such an arrangement can also provide for easier replacement of the wire 16 when it becomes worn, or partly loses its shape memory properties.

The invention therefore provides an improved apparatus and method for locking threaded fasteners in a tightened position. Depending on the type of SMA material used, the wire can be caused to be permanently tensioned to prevent the fastener from loosening once the wire is heated where the SMA material is a one-way type material. Alternatively, where the SMA material is a two-way type material, the tension in the wire can be controlled automatically in accordance with operating conditions of the article to which it is attached. This is particularly desirable in applications such as gas turbine engines, where the required torque on the fastener is generally greatest at high temperatures. This is in contrast to conventional locking wires, where the tension in the wire is generally reduced at high temperatures, due to thermal expansion. Alternatively, the tension of the two-way type SMA material wire can be controlled as desired by heating and cooling by the user.

The improved wire can be retrofitted to existing fasteners in place of conventional locking wires without any modifications. The wire can be fitted by hand, as the wire does not need to be at a high tension when fitted.

While the invention has been described in conjunction with the examples described above, many equivalent modifications and variations will be apparent to those skilled in the art when given this disclosure. Accordingly, the examples of the invention set forth above are considered to be illustrative and not limiting. Various changes to the described embodiment may be made without departing from the scope of the invention as defined by the claims.

For example, the wire could comprise other SMA materials, and the bolt could comprise other suitable materials. Though the invention has been described in relation to bolts having heads, other types of threaded fastener could be used, such as nuts or headless screws.

## Claims

1. A threaded fastener assembly (10) comprising:
a threaded fastener (12); and
a length of locking wire (16), the locking wire (16) comprising a shape memory alloy material, wherein the locking wire (16) is configured such that the wire contracts when the locking wire (16) is heated from a temperature below an austenite start temperature (Aₛ) of the locking wire (16) to a temperature above the austenite start (Aₛ) temperature of the locking wire (16).

2. A threaded fastener according to claim 1, wherein the locking wire (16) comprises Nickel Titanium alloy (NiTi).

3. A threaded fastener according to claims 1 or 2, wherein the locking wire (16) comprises a material having an austenite start temperature Aₛ in the range 0°C to 100°C, and may comprise a material having an austenite finish temperature A_{f} in the range 0°C to 100°C.

4. A threaded fastener according to any of the preceding claims, wherein the locking wire (16) comprises a two-way shape memory alloy material which may undergo an austenite to martensite transition when cooled from a temperature above a martensite start temperature Mₛ to a temperature below a martensite start temperature Mₛ.

5. A threaded fastener according to claim 4, wherein the locking wire (16) is configured to expand when cooled from a temperature above the martensite start temperature Mₛ of the wire to a temperature below the martensite start temperature Mₛ of the wire.

6. A threaded fastener assembly according to claim 4 or claim 5, wherein the locking wire comprises a material having an Mₛ temperature in the range -100°C to 200°C.

7. A threaded fastener assembly according to any of the preceding claims, wherein the locking wire (16) comprises a one-way shape memory alloy material.

8. A method of locking a threaded fastener (12) in a desired position using a locking wire (16), the method comprising:
rotating the threaded fastener (12) to a tightened position on an article (11);
at a temperature below the austenite start temperature Aₛ of the wire, fixing a first end (18) of the locking wire (16) to the threaded fastener (120 such that the locking wire (16) projects from the fastener (12), and fixing a second end (20) of the locking wire (16) to an anchor (22); and
heating the locking wire (16) to at least a temperature above than the austenite start temperature Aₛ of the locking wire such that the locking wire (16) contracts.

9. A method according to claim 8, wherein during the heating step, the locking wire (16) is heated to a temperature above an austenite finish temperature A_{f} of the locking wire.

10. A method according to claim 8 or claim 9, wherein prior to the heating step, the locking wire (16) is cooled to a temperature below the Aₛ of the locking wire (16).

11. A method according to any of claims 8 to 10, wherein the locking wire (16) is heated by one of conducting an electrical current through the wire (16) to cause resistive heating, and applying an external heat source.

12. A method according to any of claims 8 to 11, wherein the locking wire (16) comprises a two-way shape memory alloy, and the locking wire (16) is cooled from a temperature above a martensite start temperature Mₛ, to a temperature below a martensite start temperature Mₛ such that the locking wire expands.

13. A method according to any of claims 10 to 15, wherein prior to heating the wire (16) from a temperature below Aₛ, the wire is stretched to a predetermined extent at a temperature below Aₛ.

14. An article (11) joined by a threaded fastener assembly (10) according to any of claims 1 to 7.

15. A gas turbine engine comprising an article according to claim 14.
